# EUROPÄISCHE PATENTSCHRIFT

(11) **EP 1 995 487 B1**
(45) Veröffentlichungstag und Bekanntmachung des Hinweises auf die Patenterteilung: **29.07.2009**
(21) Anmeldenummer: 07010218.1
(22) Anmeldetag: 23.05.2007
(51) Int. Cl.: F16D 65/12

(54) **Bremsscheibe**
Brake disc
Disque de frein

(43) Veröffentlichungstag der Anmeldung: 26.11.2008
(73) Patentinhaber: Faiveley Transport Remscheid GmbH, 42859 Remscheid (DE)
(72) Erfinder: Merkel, Thomas, Dr., 50354 Hürth (DE); Neller, Björn, 51107 Köln (DE); Aab, Heinz, 42897 Remscheid (DE); Schwinning, Ulrike, 42897 Remscheid (DE)
(74) Vertreter: Richter, Werdermann, Gerbaulet & Hofmann

(56) Entgegenhaltungen:
- WO-A-93/21453
- DE-A1- 2 320 115
- DE-C2- 4 308 910
- US-A- 5 429 214
- US-A1- 2004 124 046

## Beschreibung

Die Erfindung betrifft eine Bremsscheibe nach dem Oberbegriff des Anspruches 1.

Um Wartungskosten im Zusammenhang von Bremsscheiben für Schienenfahrzeuge zu senken, werden geteilte Bremsscheiben eingesetzt. Diese sind an einem Radscheibenkörper befestigt oder sind als Weitenbremsscheibe ausgebildet und können durch ihre Halbierung leicht montiert bzw. demontiert werden, ohne die Räder abzupressen. Die Bremsscheiben weisen eine Reibfläche auf, die durch durch Wärmedehnung jedoch zur Rissbildung neigt.

Aus der DE 43 08 910 C2 ist eine Bremsscheibe bekannt, bei der der Reibring mit die Stoßstellen überbrückende Ringnuten versehen ist, deren Achsen parallel zur Achse des Reibringes verlaufen, wobei in jeder Ringnut ein vollständig ausfüllender, die Stoßstelle überbrückender Ringkörper eingesetzt ist. Dadurch soll für die Verbindung beider Reibringsegmente kein zusätzlicher Bauraum erforderlich sein, so dass die Bremsscheibe auch unbelüftet oder nur mit kurzen Kühlrippen ausgebildet werden kann. Durch diese Ausbildung soll die Bremsscheibe an den Stoßstellen einerseits eine druck- und scherfeste bzw. durch radiale Verschiebungskräfte belastbare Verbindung zwischen den Ringsegmenten schaffen, andererseits soll die Verbindung auch Zugkräfte aufnehmen. Die Ringsegmente des Reibringes werden durch achsparallele Schrauben und Passstifte an der Radscheibe gehaltert,

Die Patentschrift 38 39 073 C2 beschreibt eine Bremsscheibe für Schienenfahrzeuge mit geteilten Bremsringen. Die geteilten Bremsringe werden auch hier mit achsparallelen Pass und/oder Durchgangsschrauben an den Radscheibenkörper befestigt. Um durch Spannungskonzentrationen an durchgehenden Bohrungen induzierte Rissbildungen im Bereich der Seitenfläche der Bremsringe zu vermeiden, sind im Material der Bremsringe ausgebildete ringförmige Entlastungsrillen vorgesehen.

US-A-5 429 214 zeigt ein gattungsgemäße Bremsscheibe.

Der Erfindung liegt die Aufgabe zugrunde, eine Bremsscheibe der genannten Art zu schaffen, die einerseits eine druck- und scherfeste Verbindung zwischen den Ringsegmenten sicherstellt, und zwar ohne dass zusätzlicher Bauraum erforderlich ist, und andererseits Rissbildungen im Bereich der Seitenfläche der Bremsringe vermeidet. Die Verbindung muss so gestaltet sein, dass sichergestellt ist, dass kein Versatz in der Teilungsebene entsteht, da anderenfalls ein Spalt, eine Stufe oder dgl. auftreten könnte. Insgesamt muss das Betriebsverhalten eines ungeteilten Reibrings erreicht werden.

Diese Aufgabe wird durch eine Bremsscheibe mit den kennzeichnenden Merkmalen des Anspruches 1 in Verbindung mit seinen Oberbegriffsmerkmalen gelöst.

Die Unteransprüche kennzeichnen vorteilhafte Ausgestaltungen der Erfindung.

Die Erfindung beruht auf der Erkenntnis, dass eine homogene Masseverteilung in den Bremsringen die Rissbildung erheblich reduziert. Durch die wechselseitige Schraubenanordnung wird in einfacher Weise eine homogenere Anordnung geschaffen.

Durch die Erfindung können durch eine geteilte Version bzw. der zweiteiligen Bremsringausführung Wartungskosten der Betreiber gesenkt werden. Die geteilte Version besitzt also Reibringe, die aus zwei oder mehr Segmenten bestehen. Diese Segmente werden über die erfindungsgemäßen Schraubenverbindungen zusammengehalten. Diese ermöglichen, dass sich die erfindungsgemäße Bremsscheibe gegenüber einer ungeteilten Version technisch und konstruktiv analog verhält.

Die konstruktive Gestaltung muss hier so erfolgen, dass kein größerer Bauraum erforderlich ist als bei einer ungeteilten Scheibe.

Problematisch ist der für die konstruktive Ausführung der erfindungsgemäßen Schraubenverbindung zur Verfügung stehende Bauraum. Die konstruktive Gestaltung muss hier so erfolgen, dass kein größerer Bauraum erforderlich ist als bei einer ungeteilten Scheibe. Die erfindungsgemäße Bremsscheibe hält einer hohen mechanischen und thermischen Belastung stand.

Rissbildungen auf der Reibfläche werden dadurch vermieden, dass eine homogene Masseverteilung durch die Schraubenanordnung an der Anbindungsseite erfolgt. Wechselseitig bedeutet, dass das Paar Schraubenköpfe nicht auf der gleichen Seite der Trennung liegt. Werden die Schraubenköpfe wechselseitig angeordnet ergibt sich die gewünschte Masseverteilung durch zum Beispiel wechselseitige Nutung, wodurch die Rissneigung auf der Reibfläche reduziert wird.

Es ist vorgesehen, dass die Schrauben des Schraubenpaares nicht orthogonal zur Trennfläche und geneigt zur Reibfläche angeordnet sind. Die Schrauben sind praktisch im Winkel zur Reibfläche angeordnet. "Im Winkel angeordnet" bedeutet, dass die Segmentverbindungsschrauben nicht parallel zur Reibfläche oder senkrecht zur Trennfläche zur Reibfläche verlaufen, Durch die schräge Anordnung der Schrauben bleibt mehr Masse am Reibring übrig, was zu einer homogeneren Masseverteilung über den gesamten Reibring führt und somit die Rissbildung weiter reduziert. Zweckmäßigerweise sind aus Gründen der Homogenität die Segmentverbindungsschrauben zur Reibfläche jeweils in entgegengesetzter Richtung geneigt angeordnet. Der realisierbare Neigungswinkel hängt von der Reibringdicke ab. Zweckmäßig ist jedoch ein Winkel von 3° - 30°, insbesondere etwa 6°.

Durch die schräge Anordnung der Segmentverbindungsschrauben entstehen Kraftkomponenten quer zur Schraubenachse. Daher ist es sehr günstig, wenn an jeder Stoßstelle wenigstens eine Passbuchse vorhanden ist, die die Querkräfte aufnimmt.

Ein Ausführungsbeispiel wird anhand der Zeichnungen näher erläutert, wobei weitere vorteilhafte Weiterbildungen der Erfindung und Vorteile derselben beschrieben sind. Es zeigen in rein schematischer Darstellung:
- Fig. 1: eine vergrößerte Darstellung einer erfindungsgemäßen Verbindungseinrichtung, und
- Fig. 2: eine Schnittdarstellung einer Segmentverbindungsschraube im montierten Zustand,

In den Figuren sind gleiche Teile mit denselben Bezugszeichen versehen.

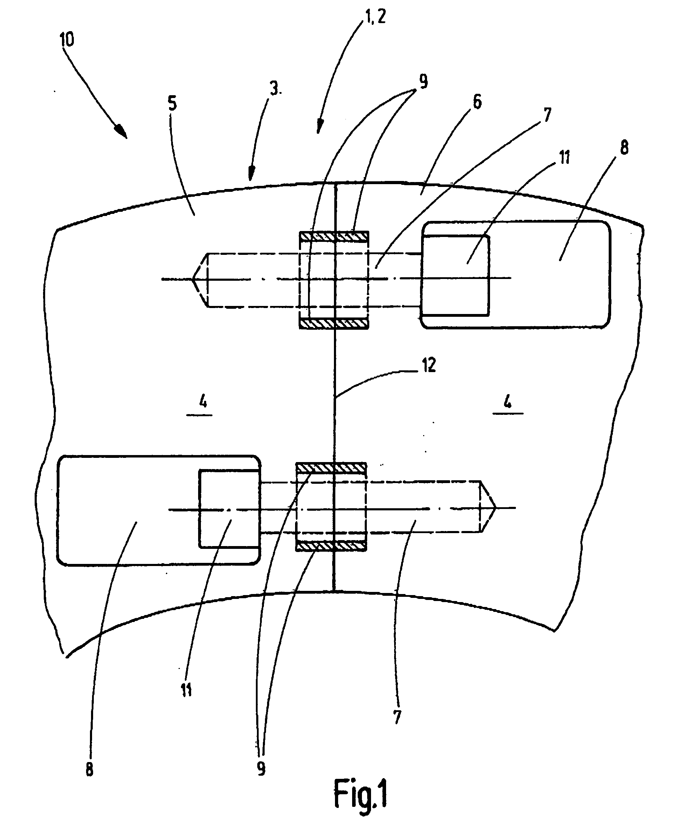

Die Fig. 1 zeigt eine Bremsscheibe 1 für Schienenfahrzeuge mit zu beiden Seiten eines nicht sichtbaren Radscheibenkörpers 2 angeordneten Bremsringen, von denen nur der der dem Behälter zugewandte Bremsring dargestellt ist. Die Bremsringe 3 weist auf einer dem Radscheibenkörper 2 abgewandten Seite eine Reibfläche 4 und an der zugewandten Seite 4a Kühlrippen bzw. eine Kühlrippenstruktur auf.

Die Bremsringe 3 sind jeweils in zwei halbkreisförmige Reibringsegmenten 5 und 6 geteilt.

Wie Fig. 1 weiterhin veranschaulicht, werden die Reibringsegmente 5 und 6 an dem Radscheibenkörper 2 mittels parallel zur Achse des Rades verlaufenden Befestigungsschrauben 7 gehaltert. Die Schraubenköpfe 11 der Befestigungsschrauben 7 sind in den Bremsringen 3 versenkt angeordnet, wobei entsprechende Bohrungen 8 hierfür an den Bremsringen 3 vorhanden sind, zum Beispiel jeweils drei Bohrungen 8 für jedes Reibringsegment 5, 6. Zur Befestigung der Reibringsegmente 5, 6 sind weiterhin Montageelemente 9 vorgesehen.

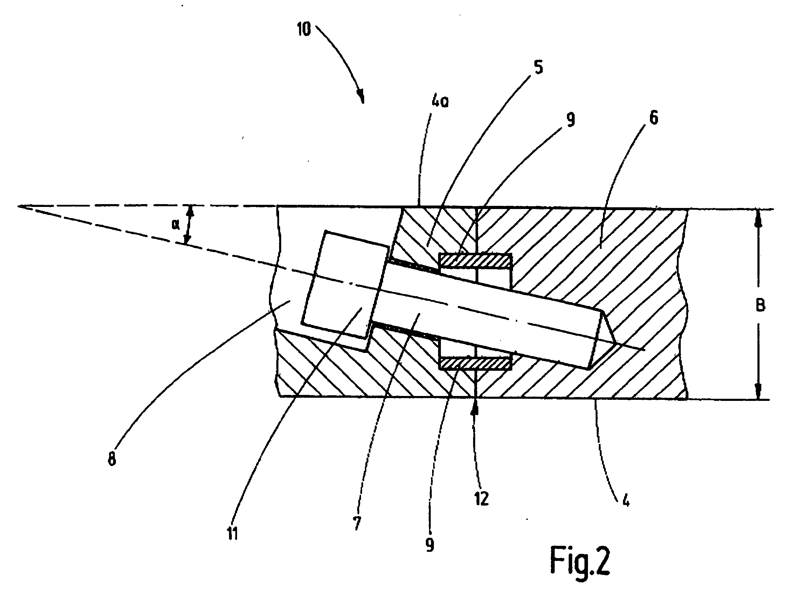

An jeder Stoßstelle 12 der Reibringsegmente 5, 6 befindet sich eine innerhalb der Reibringsegmente 3, 4 angeordnete Verbindungseinrichtung 10, die vergrößert in Fig. 2 zu betrachten ist.

Erfindungsgemäß weist die Verbindungseinrichtung 10 eine wechselseitige Schraubverbindung mit wenigstens einem Schraubenpaar auf. Das Schraubenpaar besteht aus zwei Segmentverbindungsschrauben 7. Die Segmentverbindungsschrauben 7 werden in entgegengesetzte Richtung montiert, wobei ein Schraubenkopf 11 in dem ersten Reibringsegment 5 liegt und der andere Schraubenkopf 11 im zweiten Reibringsegment 8 liegt. Die Segmentverbindungsschrauben 7 sind praktisch in dem Bremsring 3 eingebettet, und zwar mit ihren Schraubenköpfen 11 in entsprechende Nuten oder Bohrungen 8.

Wie in Fig. 2 dargestellt ist, sind die Schrauben 7 des Schraubenpaares zur Reibfläche 4 geneigt angeordnet, und zwar vorzugsweise in entgegengesetzter Richtung, wie Fig. 2 zeigt, und um einen Winkel α, zum Beispiel um etwa 6°. Der Winkel α hängt im Wesentlichen von der Breite der Reibringbreite B ab.

Durch die entgegengesetzte Neigung, wird nicht nur eine homogenere Masseverteilung erreicht, sondern auch die Verbindung an sich verbessert.

Weiterhin ist an jeder Stoßstelle 12 für jede Schraube 7 eine Passbuchse 9 vorhanden, die Scher- bzw. Querkräfte aufnimmt, so dass sich die zweiteilige Ringscheibenlösung wie eine einzige Schreibe verhält. Die Passbuchse 9 liegt innerhalb beider Segmente 5, 6.

Bevorzugterweise ist ein einziges Schraubenpaar für jede Verbindungsstelle vorhanden, möglich sind aber auch mehrere Schraubenpaare, so dass das hier aufgeführte Beispiel nicht als beschränkend zu betrachten ist. Auch kann diese Bremsscheibentechnik grundsätzlich auch für andere Fahrzeuge und bei anderen Bremsanwendungen eingesetzt werden eingesetzt werden.

Ein Schutz vor Rissbildung wird also im Wesentlichen dadurch erreicht, dass die Verbindungsschrauben der verschraubten Ringhälften wechselseitig und im Winkel angeordnet werden. Dadurch verlängert swich die rissfreie Gebrauchsdauer des Bremsringes.

### Bezugszeichenliste

- 1: Bremsscheibe
- 2: Scheibenkörper
- 3: Bremsringe
- 4: Reibfläche
- 5,6: Reibringsegmente
- 7: Befestigungsschraube
- 8: Bohrung / Nut
- 9: Montageelemente / Passbuchsen
- 10: Verbindungseinrichtung
- 11: Schraubenköpfe
- 12: Stoßstelle

## Patentansprüche

1. Bremsscheibe (1), insbesondere für Schienenfahrzeuge, mit zu beiden Seiten eines Scheibenkörpers (2) angeordneten Bremsringen (3) oder mit auf einer Seite eines Scheibenkörpers angeordneten Bremsring als Radbremsscheibe, wobei jeder Bremsring (3) in mindestens zwei kreisförmigen Reibringsegmente (5, 6) geteilt ist und an den Stoßstellen (12) der Reibringsegmente (5, 6) mit einer innerhalb der Reibringsegmente (5, 6) angeordneten Verbindungseinrichtung (10) versehen ist, wobei an jeder Stoßstelle eine Schraubverbindung mit wenigstem einem Schraubenpaar als Verbindungseinrichtung (10) vorhanden ist, **dadurch gekennzeichnet, dass** eine wechselseitige Schraubverbindung mit dem Schraubenpaar derart vorhanden ist, dass die Schrauben (7) des Schraubenpaares zur Reibfläche nicht orthogonal zur Trennfläche und geneigt zur Reibfläche angeordnet sind.

2. Bremsscheibe nach Anspruch 1, **dadurch gekennzeichnet, dass** die Schrauben (7) des Schraubenpaares zur Reibfläche jeweils in entgegengesetzter Richtung geneigt angeordnet sind.

3. Bremsscheibe nach Anspruch 1, **dadurch gekennzeichnet, dass** die Schrauben zur Reibfläche um einen Winkel (2) gleich 3° - 30°, insbesondere um etwa gleich 6°, geneigt angeordnet sind.

4. Bremsscheibe nach einem der vorhergehenden Ansprüche, **dadurch gekennzeichnet, dass** an jeder Stoßstelle (12) mindestens eine Passbuchse (9) vorhanden ist.

5. Bremsscheibe nach einem der vorhergehenden Ansprüche, **dadurch gekennzeichnet, dass** die Bremsringe (3) Kühlrippen umfassen.

6. Bremsscheibe nach einem der vorhergehenden Ansprüche, **dadurch gekennzeichnet, dass** die Reibringsegmente (5, 6) an dem Scheibenkörper (2) durch parallel zur Achse des Rades verlaufenden Befestigungsschrauben gehaltert sind, deren Schraubenköpfe (11) in den Bremsringen (3) versenkt angeordnet sind.

7. Bremsscheibe nach einem der vorhergehenden Ansprüche, **dadurch gekennzeichnet, dass** jedes Reibringsegment (5, 6) mit einer für einen Schraubenkopf (11) der Schrauben (7) des Schraubenpaares entsprechende Nut (8) ausgeführt ist.

8. Bremsscheibe nach einem der vorhergehenden Ansprüche, **dadurch gekennzeichnet, dass** jede Schraube (7) des Schraubenpaares als Innensechskantschrauben ausgeführt ist.

## Claims

1. A brake disc (1), more preferably for rail vehicles, with brake rings (3) arranged on both sides of a disc body (2) or with a brake ring as wheel brake disc arranged on a side of a disc body, wherein each brake ring (3) is divided into at least two circular friction ring segments (5, 6) and at the abutting points (12) of the friction ring segments (5, 6) is provided with a joining device (10) arranged within the friction ring segments (5, 6), wherein on each abutting point a screw connection with at least one screw pair as connecting device (10) is provided, **characterized in that** a mutual screw connection with a screw pair is present in such a manner that the screws (7) of the screw pair are arranged to the friction surface not orthogonally to the separating surface and inclined to the friction surface.

2. The brake disc according to Claim 1, **characterized in that** the screws (7) of the screw pair are each arranged to the friction surface inclined in the opposite direction.

3. The brake disc according to Claim 1, **characterized in that** the screws are arranged to the friction surface inclined by an angle (2) equal to 3° - 30°, more preferably by approximately equal to 6°.

4. The brake disc according to any one of the preceding claims, **characterized in that** on each abutting point (12) at least one fitted bush (9) is present.

5. The brake disc according to any one of the preceding claims, **characterized in that** the brake rings (3) comprise cooling ribs.

6. The brake disc according to any one of the preceding claims, **characterized in that** the friction ring segments (5, 6) are held on the disc body (2) through fastening screws that run parallel to the axis of the wheel, whose screw heads (11) are arranged sunk in the brake rings (3).

7. The brake disc according to any one of the preceding claims, **characterized in that** each friction ring segment (5, 6) is embodied with a slot (8) corresponding to a screw head (11) of the screws (7) of the screw pair.

8. The brake disc according to any one of the preceding claims, **characterized in that** each screw (7) of the screw pair is embodied as hexagon socket head screw.

## Revendications

1. Disque de frein (1), notamment pour véhicules ferroviaires, comportant des cylindres creux de frein (3) disposés des deux côtés d'un corps de disque (3) ou un cylindre creux de frein disposé d'un côté d'un corps de disque pour faire office de disque de frein de roue, chaque cylindre creux de frein (3) étant divisé en au moins deux segments annulaires de friction de forme circulaire (5, 6) et étant pourvu aux points de jointure (12) des segments annulaires de friction (5, 6) d'un dispositif de raccordement (10) disposé dans les segments annulaires de friction (5, 6), étant prévu à chaque point de jointure un raccordement vissé comprenant au moins une paire de vis faisant office de dispositif de raccordement (10), **caractérisé en ce qu'**il y a un raccordement vissé alternatif avec la paire de vis de manière telle que les vis (7) de la paire de vis, par rapport à la surface de friction, sont disposées non orthogonalement à la surface de séparation et inclinées par rapport à la surface de frottement.

2. Disque de frein selon la revendication 1, **caractérisé en ce que** les vis (7) de la paire de vis sont disposées inclinées par rapport à la surface de frottement respectivement dans le sens opposé.

3. Disque de frein selon la revendication 1, **caractérisé en ce que** les vis sont disposées inclinées d'un angle (2) égal à 3°- 30°, notamment environ égal à 6°, par rapport à la surface de frottement.

4. Disque de frein selon une des revendications précédentes, **caractérisé en ce que,** à chaque point de jointure (12), au moins un manchon d'ajustement (9) est prévu.

5. Disque de frein selon une des revendications précédentes, **caractérisé en ce que** les cylindres creux de frein (3) comprennent des ailettes de refroidissement.

6. Disque de frein selon une des revendications précédentes, **caractérisé en ce que** les segments annulaires de friction (5, 6) sont fixés au corps de disque (2) par des vis de fixation s'étendant parallèlement à l'axe de la roue et dont les têtes de vis (11) sont encastrées dans les cylindres creux de frein (3).

7. Disque de frein selon une des revendications précédentes, **caractérisé en ce que** chaque segment annulaire de friction (5, 6) est réalisé avec une rainure (8) correspondant à une tête de vis (11) des vis (7) de la paire de vis.

8. Disque de frein selon une des revendications précédentes, **caractérisé en ce que** chaque vis (7) de la paire de vis est réalisée sous forme d'une vis à 6 pans creux.
